# EUROPEAN PATENT APPLICATION

(11) **EP 1 471 494 A1**
(43) Date of publication of application: **27.10.2004**
(21) Application number: 03076232.2
(22) Date of filing: 24.04.2003
(51) Int. Cl.: G09G 3/32

(54) **Organic light-emitting diode drive circuit for a display application**

(71) Applicant: BARCO N.V., 8500 Kortrijk (BE)
(72) Inventor: Tanghe, Gino, 8650 Merkem (BE); Willem, Patrick, 8400 Oostende (BE); Van Hille, Herbert, Cambridge, MA 02138-5321 (US); Thielemans, Robbie, 9610 Nazareth (BE)
(74) Representative: Donné, Eddy

(57) **Abstract**

Organic light-emitting diode drive circuit for a display application, said display comprising a plurality of organic light-emitting diodes (OLEDs) (120) having an anode and a cathode, said organic light-emitting diodes (OLEDs) (120) being connected to anode lines (1-2-3) and cathode lines (4-5-6), and at least one drive circuit (200-300), characterized in that the organic light-emitting diodes are arranged in a common anode configuration, whereas said drive circuit (200-300) is configured as a common anode drive device, wherein each concerned cathode line by means of a respective first switch (220a-220b-220c) can be connected to a current source (150a-150b-150c) and wherein each concerned anode line by means of a respective second switch (210a-210b-210c) can be connected to a positive power supply; and in that the respective first switches (220a-220b-220c) are configured such that, when a cathode line is in use, a connection is made between the cathode line in use and the respective current source (150a-150b-150c) and, when said cathode line is unused, this cathode line is connected to a positive power supply.

## Description

### FIELD OF THE INVENTION

The present invention relates to an organic light-emitting diode (OLED) drive circuit for a display application, more particularly for a common anode passive matrix display application.

### BACKGROUND OF THE INVENTION

Organic light-emitting diode (OLED) technology incorporates organic luminescent materials that, when sandwiched between electrodes and subjected to a DC electric current, produce intense light of a variety of colors. These OLED structures can be combined into the picture elements or pixels that comprise a display. OLEDs are also useful in a variety of applications as discrete light-emitting devices, or as the active element of light-emitting arrays or displays, such as flat-panel displays in watches, telephones, laptop computers, pagers, cellular phones, calculators, and the like. To date, the use of light-emitting arrays or displays has been largely limited to small-screen applications such as those mentioned above.

Demands for large-screen display applications possessing higher quality and higher resolution has led the industry to turn to alternative display technologies that replace older LED and liquid crystal displays (LCDs). For example, LCDs fail to provide the bright, high light output, larger viewing angles and speed requirements that the large-screen display market demands. By contrast, OLED technology promises bright, vivid colors in high resolution and at wider viewing angles. However, the use of OLED technology in large-screen display applications, such as outdoor or indoor stadium displays, large marketing advertisement displays, and mass-public informational displays, is still in the development stage.

Several technical challenges exist relating to the use of OLED technology in a large-screen application. One such challenge is that OLED displays are expected to offer a wide dynamic range of colors, contrast and light intensity depending on various external environmental factors including ambient light, humidity and temperature. For example, outdoor displays are required to produce more white color contrast during the day and more black color contrast at night. Additionally, light output must be greater in bright sunlight and lower during darker, inclement weather conditions. The intensity of the light emission produced by an OLED device is directly proportional to the amount of current driving the device. Therefore, the more light output needed, the more current is fed to the pixel. Accordingly, less light emission is achieved by limiting the current to the OLED device.

A pixel, by definition, is a single point or unit of programmable color in a graphic image. However, a pixel may include an arrangement of sub-pixels, for example red, green and blue sub-pixels. It is known that such sub-pixels can be driven by a drive circuit having a common cathode configuration. According to a new technology, also a common anode configuration can be applied. These configurations refer to whether the three sub-pixels are addressed via a common cathode line or via a common anode line, respectively. Accordingly, in the common cathode configuration, the cathodes of the three sub-pixels are electrically connected and addressed in common. In the common anode configuration, the anodes of the three sub-pixels are electrically connected and addressed in common.

In the known common cathode drive circuit, a current source is arranged between each individual anode and a positive power supply, while the cathodes are electrically connected in common to ground. Consequently, the current and voltage are not independent of one another, thus small voltage variations result in fairly large current variations, having the further consequence of light output variations. Furthermore, in the common cathode configuration the constant current source is referenced to the positive power supply, so any small voltage variation results in a current variation. For these reasons, the common cathode configuration makes precise control of the light emission, which is dependent upon precise current control, more difficult.

By contrast, in an anode drive circuit, a current source is arranged between each individual cathode and ground, while the anodes are electrically connected in common to the positive power supply. As a result, the current and voltage are completely independent of one another; thus, small voltage variations do not result in current variations, thereby eliminating the further consequence of light output variations. Furthermore, in the common anode configuration the constant current source is referenced to ground, which does not vary, thereby eliminating any current variations due to its reference. For these reasons, the common anode configuration lends itself to precise control of the light emission needed in a large-screen display application.

Another consideration is that a common anode design requires NPN transistor design while common cathode design requires PNP transistor design. NPN transistors are smaller and faster than PNP transistors, which employ holes to carry the electric current as opposed to electrons. The electron carriers of the NPN transistors are smaller and much more mobile than their PNP counterparts. As a result, PNP transistors are 30-50% more costly than NPN transistors to manufacture because they require a larger quantity of materials for production.

An example of a pixel drive circuit is found in reference to U.S. patent No. 6.512.334, entitled, "Organic electroluminescence matrix-type single-pixel drivers." This patent describes an organic electroluminescence (OEL) matrix-type single-pixel driver that comprises an OEL device, a first transistor and a second transistor. The first transistor and the second transistor form a complementary structure so that when the data line uses the first transistor to drive an OLED device, the second transistor is in the OFF state, causing no power consumption. When the data line is in the LOW state, the first transistor is in the OFF state. The second transistor is in a sub-threshold state after getting rid of extra charges.

Although the control circuit described in US 6.512.334 employs a switching mechanism to control anode voltages, it does not employ a common anode design, nor does it provide a means for incorporating smaller, faster and less expensive components. Furthermore, the drive circuit described in US 6.512.334 provides only voltage control to each individual pixel in the matrix display and thus provides no means for the high currents necessary to produce high light output. Finally, the drive circuit of US 6.512.334 does not provide a means for varying the amount of light output or controlling contrast in a high resolution passive matrix display.

### SUMMARY OF THE INVENTION

It is an object of the present invention to provide an improved drive circuit that enables high light output combined with good contrast in a passive matrix OLED display using a common anode configuration.

It is another object of this invention to provide a drive circuit that enables a dynamic range in a passive matrix OLED display while improving speed and resolution using a common anode configuration.

It is yet another object of this invention to provide a drive circuit that precisely controls light output of each OLED in a passive matrix OLED display using a common anode configuration.

It is yet another object of this invention to provide a pixel drive circuit that uses faster, smaller and less expensive components than conventional OLED display drivers.

In order to realize such improved drive circuit, the present invention in first instance relates to an organic light-emitting diode drive circuit for a display application, said display comprising a plurality of organic light-emitting diodes (OLEDs) having an anode and a cathode, said organic light-emitting diodes (OLEDs) being connected to anode lines and cathode lines, and at least one drive circuit, said drive circuit being characterized in that the organic light-emitting diodes are arranged in a common anode configuration, whereas said drive circuit is configured as a common anode drive device, wherein each concerned cathode line by means of a respective first switch can be connected to a current source and wherein each concerned anode line by means of a respective second switch can be connected to a positive power supply; and in that the respective first switches are configured such that, when a cathode line is in use, a connection is made between the cathode line in use and the respective current source and, when said cathode line is unused, this cathode line is connected to a positive power supply.

By connecting the cathodes of unused or inactive OLEDs to the positive power supply, a number of problems, which are the result of reverse current through certain inactive OLEDs, can be eliminated, as will be explained hereafter in the detailed description.

In a preferred embodiment, the positive power supply to which the first switches can be connected and the positive power supply to which the second switches can be connected are the same, resulting in that a further improved effect is obtained.

In the most preferred embodiment, the drive circuit is further characterized in that said second switches are configured such that, when an anode line is in use, a connection is made between the anode line in use and a respective positive power supply and, when said anode line is unused, this anode line is connected to ground.

In this way, further disadvantages of reverse currents through certain OLEDs, said reverse currents inducing limited currents in forward direction through other OLEDs, resulting in that the latter become lit up to a certain extent, can be avoided, as will be explained in detail in the detailed description.

Preferably, the current sources are referenced to ground.

According to a particular form of embodiment, the drive circuit according to the invention is further characterized in that said anode lines and cathode lines are arranged along a substrate, whereby multiple pixels are formed, said anode lines and cathode lines being formed of a conductive layer; and in that at least one of said cathode lines or anode lines of the display shows a plurality of electrical connections spread over the length of said at least one line, which connections provide in an electrical connection to a common electrical conducting element of more massive structure than the conductive layers formed on the substrate, so as to reduce the parasitic series resistance of the material used for the conductive layers and/or so as to reduce the parasitic capacitance of the OLED display itself.

### BRIEF DESCRIPTION OF THE DRAWINGS

With the intention of better showing the characteristics of the invention, hereafter as examples without any limitative character, several preferred forms of embodiment are described, with reference to accompanying drawings, wherein:
Figure 1 shows a schematic diagram of a common anode OLED drive circuit;
Figure 2 shows a schematic diagram of an OLED drive circuit in accordance with an embodiment of the invention;
Figure 3 shows a schematic diagram of an OLED drive circuit in accordance with a preferred embodiment of the invention;
Figure 4 shows a more detailed schematic diagram of a small portion of the OLED drive circuit of the invention;
Figure 5 shows an example timing diagram for the control signals of an OLED drive circuit.

### DETAILED DESCRIPTION OF PREFERRED EMBODIMENTS

The present invention is a drive circuit for a passive matrix organic light-emitting diode (OLED) display arranged in a common anode configuration. The present invention further enables precision control of light output for each individual OLED device in order to provide high light output and dynamic color intensity ranges simultaneously.

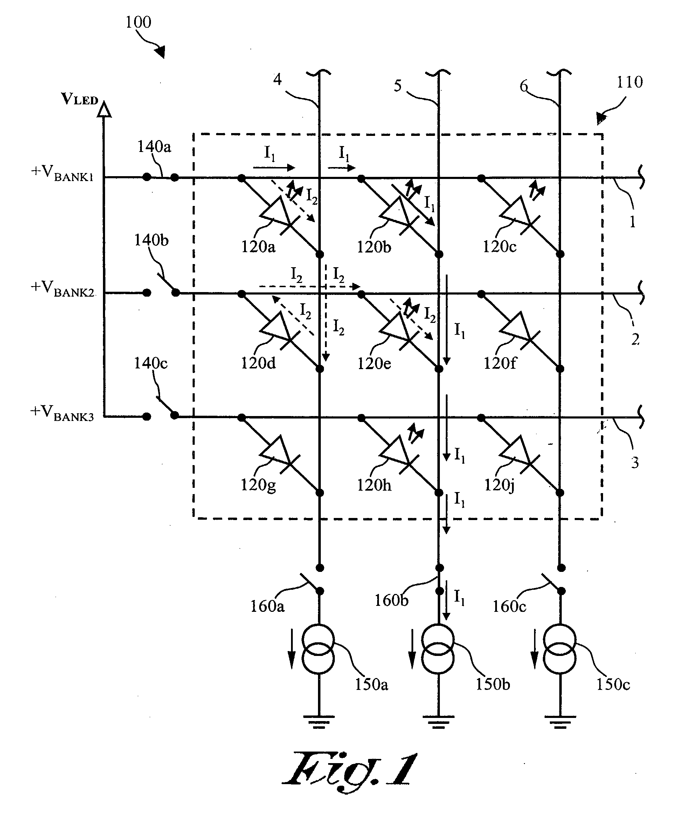

Figure 1 illustrates a schematic diagram for an OLED drive circuit 100 that includes an OLED array 110, which is representative of a portion of a common anode OLED display. OLED array 110 further includes a plurality of OLEDs 120 (each having an anode and cathode as is well known) arranged in a matrix of rows and columns. For example, OLED array 110 is formed of OLEDs 120a through 120j arranged in a 3 x 3 array, where the anodes of OLEDs 120a, 120b, and 120c are electrically connected to row line 1, the anodes of OLEDs 120d, 120e, and 120f are electrically connected to row line 2, and the anodes of OLEDs 120g, 120h, and 120j are electrically connected to row line 3. OLED array 110 may be any dimension, but is shown here as a 3 x 3 array for illustrative purposes only. Furthermore, the cathodes of OLEDs 120a, 120d and 120g are electrically connected to a column line 4, the cathodes of OLEDs 120b, 120e and 120h are electrically connected to a column line 5, and the cathodes of OLEDs 120c, 120f, and 120j are electrically connected to a column line 6.

A positive voltage +V_{LED}, typically ranging between 3 and 20 volts, is electrically connected to each respective row line via a plurality of switches 140. Switches 140 are conventional active switch devices, such as FET switches or transistors having suitable voltage and current ratings. More specifically, +V_{LED} is electrically connected to row line 1 via switch 140a, +V_{LED} is electrically connected to row line 2 via switch 140b, and +V_{LED} is electrically connected to row line 3 via switch 140c. OLED drive circuit 100 further includes a plurality of current sources 150, for example, a current source 150a that may be coupled to column line 4 via a switch 160a, a current source 150b that may be coupled to column line 5 via a switch 160b, and a current source 150c that may be coupled to column line 6 via a switch 160c. Current sources 150 are conventional current sources capable of supplying a constant current typically in the range of 5 to 50 mA. Examples of constant current devices include a Toshiba TB62705 (8-bit constant current LED driver with shift register and latch functions) and a Silicon Touch ST2226A (a PWM-controlled constant current driver for LED displays).

OLED array 110 within the OLED drive circuit 100 is arranged in the common anode configuration. In this way, the current and voltage are independent of one another, providing better control of the light emission.

Each OLED 120 represents a sub-pixel (typically red, green, or blue; however, any color variants are acceptable) and emits light when the voltage difference between the anode and cathode for an OLED 120 is at least 1,5 V (typically the range is 1,5 - 3 V) in conjunction with adequate current amperages. In operation, +V_{LED} is applied to the anode of a given OLED 120 by closing its corresponding switch 140 within its corresponding row line. If one wants to light up an OLED 120, its corresponding current source 150 is applied by closing its associated switch 160 within its corresponding column line. In this manner, current flows through the selected OLED 120, which acts as a capacitor, until the threshold voltage of 1,5 - 3V is present across its electrodes. Once the desired threshold voltage is achieved, the selected OLED 120 emits light at intensities proportional to the amount of current flowing through it. The standard measure of light output or luminance for an OLED display is in candela per square meter (cd/m²) and is commonly referred to as a nit: 1 cd/m² = 1 nit. For large displays, a range of 300 - 2000 nit is desirable. The current density and, thus, luminance is controlled by controlling current source 150. To illustrate, the following example shows the process for gaining light emission from OLED 120b of OLED array 110.

In this example, switch 140a is closed and therefore electrically connects +V_{LED} to row line 1. To cause light emission from OLED 120b, switch 160b is closed and therefore electrically connects current source 150b to column line 5. In this way, OLED 120b is forward biased and current I₁ flows through OLED 120b. Once the typical device threshold voltage of 1,5 - 3V is achieved across its electrodes (from cathode to anode), OLED 120b emits light. Opening switch 160b deactivates OLED 120b.

Switches 140 are always opened/closed in sequence according to a duty cycle. Switches 160 determine whether an OLED 120 emits light. The on-time of a switch 160 is between 0 (no light output) and one on-period of a switch 140. The longer switch 160 is closed, the more light output will be generated from a corresponding OLED 120.

However in said OLED drive circuit 100, activating OLED 120b also induces current I₂ in neighbouring row line 1 and column line 5, thereby causing undesired light emission from OLEDs 120 along row line 1 as well as from OLEDs 120 along column line 5. This is due to an undesired inverse current flowing through OLEDs 120 in the same row and OLEDs 120 in the same column. Reverse bias current, while exhibited in small amounts in conventional semiconductor light-emitting diodes (e.g. 10-100 µA), may be as high as 0,1 mA/cm² for an OLED 120, depending on the manufacture of the diode. This is enough current to light a forward biased diode in the short circuit path to the ground.

For example, since +V_{LED} is connected to row line 1 and current source 150b is connected to column line 5 in order to activate OLED 120b, a current I₂ flows from +V_{LED} to current source 150b via an alternate path as follows. Current I₂ flows along row line 1 to the anode of OLED 120a. Subsequently, current I₂ flows from the anode to the cathode of OLED 120a in the forward direction. Subsequently, current I₂ flows along column line 4 and reaches the cathode of OLED 120d. Subsequently, current I₂ flows from the cathode to the anode of OLED 120d in the reverse direction. Subsequently, current I₂ flows along row line 2 and reaches the anode of OLED 120e. Subsequently, current I₂ flows from the anode to the cathode of OLED 120e in the forward direction. Since the cathode of OLED 120e is connected to column line 5, the alternate path to current source 150b is completed. Since current I₂ is flowing through OLED 120d in the reverse direction, OLED 120d does not emit any light. However, because current I₂ is flowing through OLED 120a and OLED 120e in the forward direction, OLED 120a and OLED 120e emit a small amount of light. Although still not acceptable, the light emission of OLED 120a and OLED 120e is small compared with the light emission of OLED 120b because current I₂ is small compared with current I₁ and because the threshold voltage of 1,5 - 3V is barely achieved across OLED 120a and OLED 120e. Similarly, in this manner, the entire row and column of OLEDs 120 for row line 1 and column line 5 emits varying nits of light. Inverse current I₂, in this example, makes it impossible to control a single sub-pixel (OLED 120b) individually without undue light emission from neighbouring OLED devices within its row and column address.

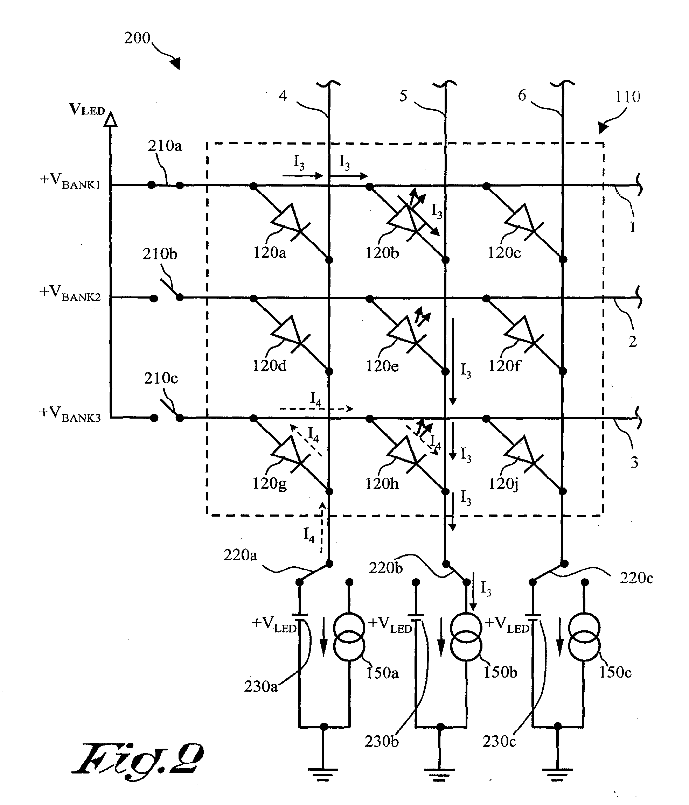

Figure 2 illustrates a schematic diagram of an OLED drive circuit 200 in accordance with an embodiment of the invention. OLED drive circuit 200 includes OLED array 110 as described in figure 1, which is a common anode design, along with additional driver circuitry. OLED drive circuit 200 further includes a switch 210a that couples row line 1 to either +V_{LED} or high Z (i. e. open circuit) as shown. In a similar manner, a switch 210b couples row line 2 to either +V_{LED} or high Z and a switch 210c couples row line 3 to either +V_{LED} or high Z. Furthermore, a switch 220a couples column line 4 to either a voltage source 230a that provides a positive +V_{LED} voltage of typically 3 - 20 V or to current source 150a as depicted in the scheme. In a similar manner, a switch 220b couples column line 5 to either a voltage source 230b or current source 150b, and a switch 220c couples column line 6 to either a voltage source 230c or current source 150c.

As in the previous example, shown in figure 1, in order to emit light from OLED 120b it is necessary to have row line 1 connected to +V_{LED} via switch 210a and column line 5 connected to current source 150b via switch 220b at the same time. Current I₃ flows from +V_{LED} through OLED 120b and through column line 5 to current source 150b. This process allows OLED 120b to become forward biased and, once the typical device threshold voltage of 1,5 - 3V is achieved across OLED 120b, OLED 120b emits light.

In order to prevent OLED 120a and OLED 120c from emitting light, column line 4 and column line 6 are connected to positive voltage sources 230a and 230c respectively. Since the anodes of both OLED 120a and 120c are connected to +V_{LED} and the cathodes are connected to +V_{LED}, there is no voltage potential across OLED 120a or 120c and thus, neither emits light. Therefore, connecting the cathodes of unused OLEDs 120 to +V_{LED} eliminates the problem of reverse current described in figure 1 where an entire row of OLEDs 120 produced light.

However, inverse currents are produced in OLED array 110 that cause OLEDs 120e and 120h to emit light. Inverse current I₄ flows inversely through OLED 120g because its cathode is connected to +V_{LED} while the anode is at a high Z. In this manner, inverse current I₄ is driven from column line 4 inversely through OLED 120g to the anode of OLED 120h, causing OLED 120h to emit light. In a similar manner, inverse current flows through OLED 120d and proceeds through forward biased OLED 120e causing OLED 120e to emit light.

Therefore, OLED drive circuit 200, while eliminating the effects of reverse current along the row line of a specific OLED 120, does not completely eliminate reverse current effects along the corresponding column line of OLEDs 120. However, for some applications it may not be necessary to eliminate all reverse current effects within OLED array 110.

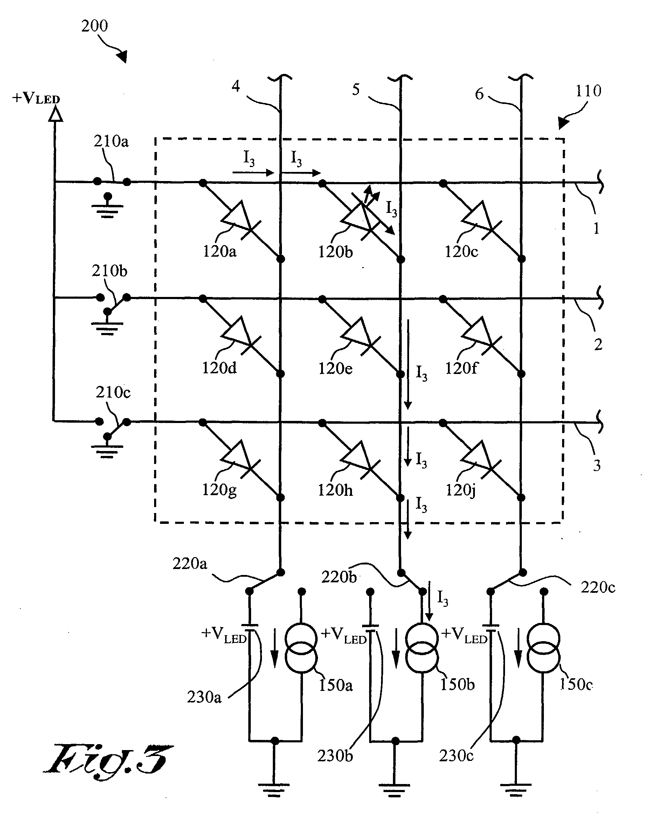

Figure 3 illustrates a schematic diagram of an OLED drive circuit 200 in accordance with a preferred embodiment of the invention. OLED drive circuit 200 further includes switch 210a that couples row line 1 to either +V_{LED} or ground (in contrast to figure 2 where switch 210a coupled row line 1 to either +V_{LED} or high Z). In a similar manner, switch 210b couples row line 2 to either +V_{LED} or ground and switch 210c couples row line 3 to either +V_{LED} or ground. This switching of row lines 1, 2 and 3 between +V_{LED} and ground and column lines 4, 5, and 6 between current sources 150 or +V_{LED} ensures that there are no open circuits during the operation.

In accordance with the preferred embodiment, row line 2 and row line 3 are connected to ground via switches 210b and 210c respectively in order to prevent OLED 120e and 120h from emitting light. Without the electrical connection of unused row lines to ground, a reverse current is induced in OLEDs 120d, 120f, 120g, and 120j that causes OLEDs 120e and 120h to emit unwanted light (as described in figure 2). However, ensuring that unused row lines are electrically connected to ground ensures that an entire column of OLEDs 120 does not emit unwanted light.

Therefore, to emit light only from OLED 120b (as described in the previous examples) the anodes of OLED 120a, 120b, and 120c are each connected to +V_{LED} via switch 210a and the cathode of OLED 120b connects to current source 150b via switch 220b. The cathodes of OLED 120a and OLED 120c are both coupled to positive voltage sources 230a and 230c, respectively. Thus, no current flows through either OLED 120a or OLED 120c due to the absence of voltage potentials across the devices and therefore, neither OLED 120a nor OLED 120c produces any light. Furthermore, no current flows through OLED 120e or OLED 120h since all inverse currents produced in OLED array 110 flow to ground via switch 210b and switch 210c. Therefore, the only light source produced in OLED array 110 is from OLED 120b. In this manner, any individual OLED 120 or bank of OLEDs 120 may be induced to emit light by controlling switches 210a through 210c and switches 220a through 220c.

The following table (Table 1) is a truth table of switch states required for activating each of the nine OLEDs 120 of OLED drive circuit 200.

**Table 1**

| | Switch 210a | Switch 210b | Switch 210c | Switch 220a | Switch 220b | Switch 220c |
|---|---|---|---|---|---|---|
| OLED 120a | +V_{LED} | GND | GND | Current source 150a | Voltage source 230b | Voltage source 230c |
| OLED 120b | +V_{LED} | GND | GND | Voltage source 230a | Current source 150b | Voltage source 230c |
| OLED 120c | +V_{LED} | GND | GND | Voltage source 230a | Voltage source 230b | Current source 150c |
| OLEO 120d | GND | +V_{LED} | GND | Current source 150a | Voltage source 230b | Voltage source 230c |
| OLED 120e | GND | +V_{LED} | GND | Voltage source 230a | Current source 150b | Voltage source 230c |
| OLED 120f | GND | +V_{LED} | GND | Voltage source 230a | Voltage source 230b | Current source 150c |
| OLED 120g | GND | GND | +V_{LED} | Current source 150a | Voltage source 230b | Voltage source 230c |
| OLED 120h | GND | GND | +V_{LED} | Voltage source 230a | Current source 150b | Voltage source 230c |
| OLED 120j | GND | GND | +V_{LED} | Voltage source 230a | Voltage source 230b | Current source 150c |

In summary, any inactive row line is tied to ground at the same time that the active row line is tied to +V_{LED}. Furthermore, any inactive column line is tied to a positive voltage at the same time that the active column line is tied to its current source. In this way, alternate current paths due to the inverse current of any OLED 120 are avoided.

Furthermore, OLED drive circuit 200 uses a common anode design whereby each OLED 120 represents one of three sub-pixels within a pixel. For example, a red sub-pixel (e.g., OLED 120a), a green sub-pixel (e.g., OLED 120b), and a blue sub-pixel (e.g., OLED 120c) of a pixel share a common anode (row line 1 in this example).

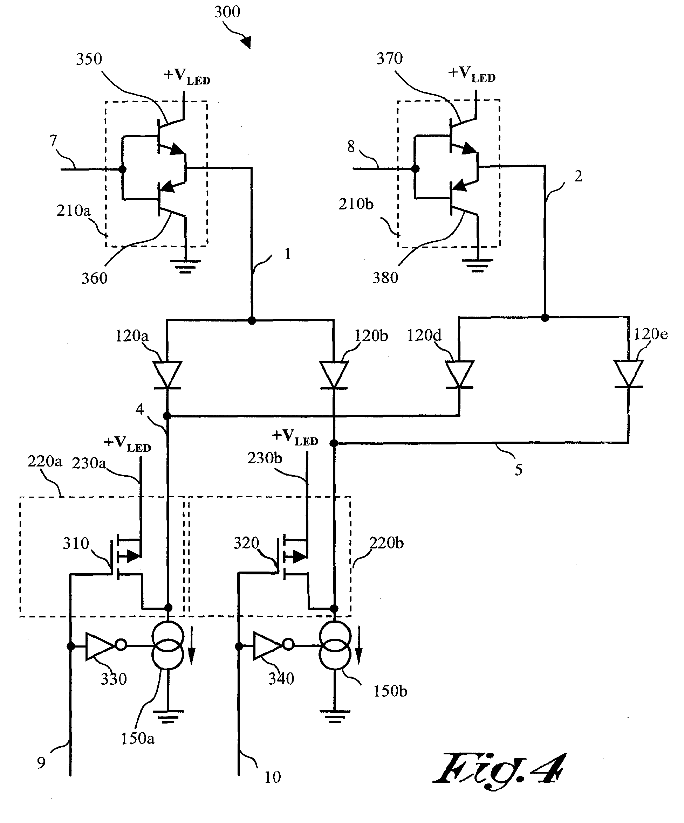

Figure 4 illustrates a schematic diagram of an OLED drive circuit 300 showing more details of a small portion of OLED drive circuit 200. OLED drive circuit 300 includes +V_{LED}, row line 1, row line 2, switch 210a that further includes a transistor 350 and a transistor 360, switch 210b that further includes a transistor 370 and a transistor 380, a switch control line 7, a switch control 'line 8, OLED 120a, OLED 120b, OLED 120d, and OLED 120e. OLED drive circuit 300 further includes voltage source 230a, switch 220a that further includes a MOSFET 310, voltage source 230b, switch 220b that further includes a MOSFET 320, current source 150a, current source 150b, a control line 9, a control line 10, an inverter 330, and an inverter 340. As described in figure 2, switch 210a and switch 210b may not connect to ground but rather provide a high Z value instead. However, in the preferred embodiment switches 210a and 210b are coupled to ground as shown.

MOSFET 310 is a P-channel FET arranged in parallel with current source 150a. More specifically, the drain of MOSFET 310 is electrically connected to the cathodes of OLEDs 120a and 120d, the source of MOSFET 310 is electrically connected to voltage source +V_{LED} 230a, and the gate of MOSFET 310 is electrically connected to control line 9. Similarly, the drain of MOSFET 320 is electrically connected to the cathodes of OLEDs 120b and 120e, the source of MOSFET 320 is electrically connected to voltage source +V_{LED} 230b, and the gate of MOSFET 320 is electrically connected to control line 10.

OLED drive circuit 300 is an example of one detailed implementation of OLED drive circuit 200 of figure 2. Other components may be used to achieve the same results without deviating from the scope and spirit of the present invention. For example, switch 210a includes transistor 350, which may be an NPN transistor, and transistor 360, which may be a PNP transistor; however, other CMOS or bipolar devices may be used with the same results. MOSFET 310 and MOSFET 320 are any conventional PMOS transistor devices having suitable voltage and current ratings for this application. However, MOSFET 310 and MOSFET 320 are representative of any suitable active switch device.

In operation, pulse width modulated (PWM) control signals are used to control the switching functions in the column lines within OLED drive circuit 300. Time multiplexing is used to control switches 210 on the switch control lines. The amount of time a pulse on control line 9 or 10 is "on" determines how much current flows through a given path. The longer a control line signal is "on", the more current is produced and, thus, the brighter a given OLED 120 becomes. The signal of control line 9 controls switch 220a and current source 150a. The signal of control line 10 controls switch 220b and current source 150b. Similarly, the signal of switch control line 7 controls switch 210a and the signal of switch control line 8 controls switch 210b.

Inverter 330 inverts the signal on control line 9 that feeds current source 150a so that switch 220a and current source 150a may never be "on" simultaneously (with the exception, however, of the propagation delay of inverter 330). When a signal on control line 9 causes MOSFET 310 to be active, MOSFET 310 transfers the positive voltage of voltage source 230a to column line 4, while inverter 330 creates an inverted signal at its output, thereby ensuring that current source 150a is not active. Furthermore, a signal on control line 9 that causes MOSFET 310 to be inactive also produces an inverted signal at the input to current source 150a, thus enabling current to flow on column line 4. However, in order to produce light emission, a corresponding anode for an OLED 120 must be connected to an ideal operating voltage. For example, switch 210a must also electrically connect row line 1 to +V_{LED} in order to induce light emission from OLED 120a, or switch 210b must electrically connect row line 2 to +V_{LED} in order to produce light from OLED 120d.

In a similar manner, PWM signals on control line 10 determine the current driving ability on column line 5, and thus control the cathode side of OLEDs 120b and 120e. Switch 210a controls the anode of OLED 120b and switch 210b controls the anode of OLED 120e. Therefore, light emits from OLED 120b when the signal on control line 10 causes MOSFET 320 to be inactive. Thus, the input to current source 150b through inverter 340 is "on" and current flows through column line 5. At the same time, a signal on switch control line 7 causes switch 210a to electrically connect row line 1 to an ideal operating voltage provided by +V_{LED}.

The following table (Table 2) is a truth table of switch states required for activating each of the four OLEDs 120 of OLED drive circuit 300.

**Table 2**

| | Switch 210a | Switch 210b | Switch 220a | Switch 220b |
|---|---|---|---|---|
| OLED 120a | +V_{LED} | GND | Current source 150a | Voltage source 230b |
| OLED 120b | +V_{LED} | GND | Voltage source 230a | Current source 150b |
| OLED 120d | GND | +V_{LED} | Current source 150a | Voltage source 230b |
| OLED 120e | GND | +V_{LED} | Voltage source 230a | Current source 150b |

The switch control lines are controlled by a time division multiplexed signal. The time division is dependent upon the number of row lines or groups of row lines. For example, several row lines may be controlled simultaneously as a group or bank by a single switch control line. Each switch control line carries a bank signal that defines whether switches 210 are connected to +V_{LED} or ground for a given period of time. If there are N banks, then the corresponding duty cycle is 1/(k.N) where k is a predefined multiple. Switches 210 are connected to +V_{LED} for a time of 1/N.T, and connected to the ground for a time (N-1)/N.T, where T is defined as a time period typically equal to 1 msec. Therefore, switch control lines carry timed bank signals and thus operate independently of the light output required from OLEDs 120. As a result, the anodes of OLEDs 120 are intermittently connected to +V_{LED} and then ground based on the time multiplexed bank signals on the switch control lines regardless of whether the corresponding OLEDs 120 are required to produce light. In contrast the PWM signal on the control lines controls when each OLED 120 produces light. Each PWM signal connects a column line to current source 150 for a corresponding OLED 120 whose anode is connected to +V_{LED} in order to produce light. The PWM signal triggers switch 220 to connect the column line to +V_{LED} as soon as corresponding OLED 120 is not required to produce light, regardless if the anode of the particular OLED 120 is still connected to +V_{LED}.

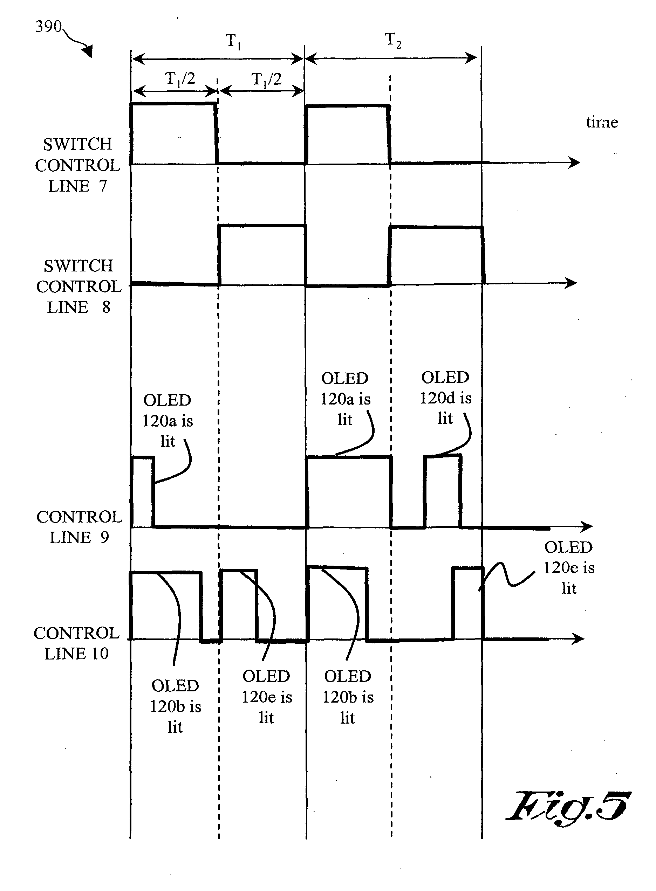

Figure 5 shows a timing diagram 390 of an example signal state where the number of banks is two and a duty cycle of 1/2 is engaged. When switch control line 7 is high, +V_{LED} is connected to the corresponding row line 1. When a switch control line 7 is low, the corresponding row line 1 is connected to ground. Similarly when switch control line 8 is high, +V_{LED} is connected to the corresponding row line 2. When a switch control line 8 is low, the corresponding row line 2 is connected to ground. When a control line 9 is high, current source 150a is connected to the corresponding column line 4. When the signal of control line 9 is low, +V_{LED} voltage source 230a is connected to the corresponding column line 4. Similarly, when the signal of control line 10 is high, current source 150b is connected to the corresponding column line 5. When the signal of control line 10 is low, +V_{LED} voltage source 230b is connected to the corresponding column line 5. As shown in figure 5, OLED 120a and OLED 120b, are lit up during the first half of time period T₁, while OLED 120e is lit during the second half of time period T₁. Similarly, OLED 120a and OLED 120b are lit for a portion of the first half of the second time period T₂ while OLEDs 120e and 120d are lit during a portion of the second half of that time frame T₂. In this manner, the PWM signals on the control lines and the bank signals on the switch control lines dictate when an OLED 120 produces light.

OLED drive circuit 300 further provides the added benefit of discharging an OLED 120. OLED 120 is immediately discharged once the corresponding current source is turned off if the anode of OLED 120 is electrically connected to a positive voltage and the corresponding cathode is also connected to a positive voltage for a period of time, which preferably is ranging from 100ns - 1000 ns. This application of equivalent voltages to both the anode and cathode of OLED 120 rapidly discharges OLED 120 without emitting light. This eliminates excessive light emission by a particular OLED 120 after its corresponding current source has been deactivated.

Furthermore, OLED drive circuit 300 provides a means for precisely controlling each OLED 120 in a given display matrix using time multiplexing signals, i.e., control line 9 and/or control line 10 in conjunction with PWM signals, i.e. switch control 7 and/or switch control 8. Furthermore, the common anode design offers the ability to use smaller NPN transistor components, which are faster and less expensive than the PNP transistors required by common cathode configurations. The use of smaller and faster components provides a greater system speed, which ultimately provides faster display update and refresh times. Common anode design also decouples power supply fluctuations from the current drivers and prevents current fluctuations that degrade display quality by adversely affecting light output. Finally, the ability to produce varying anode voltages for the various ideal operating ranges of each colored sub-pixel provides the system with high dynamic ranges at high resolution.

It is clear that the afore-mentioned column lines 4-5-6 are identical to the "cathode lines" mentioned in the summary of the invention and in the appended claims. Similarly, the row lines 1-2-3 correspond to the "anode lines" mentioned in the summary of the invention and in the appended claims.

The afore-mentioned switches which cooperate with the column lines are identical to the "first switches" mentioned in the summary of the invention and in the claims, whereas the switches which cooperate with the row lines are identical to the "second switches".

Furthermore, it is clear that with the "positive power supply" mentioned in the summary of the invention and in the claims, a positive voltage is meant, such as the in the figures indicated voltage +V_{LED}.

The present invention is in no way limited to the forms of embodiment described by way of example and represented in figures, however such drive circuit can be realized in various forms without leaving the scope of the invention.

## Claims

1. Organic light-emitting diode drive circuit for a display application, said display comprising a plurality of organic light-emitting diodes (OLEDs) (120) having an anode and a cathode, said organic light-emitting diodes (OLEDs) (120) being connected to anode lines (1-2-3) and cathode lines (4-5-6), and at least one drive circuit (200-300), **characterized in that** the organic light-emitting diodes are arranged in a common anode configuration, whereas said drive circuit (200-300) is configured as a common anode drive device, wherein each concerned cathode line by means of a respective first switch (220a-220b-220c) can be connected to a current source (150a-150b-150c) and wherein each concerned anode line by means of a respective second switch (210a-210b-210c) can be connected to a positive power supply; and **in that** the respective first switches (220a-220b-220c) are configured such that, when a cathode line is in use, a connection is made between the cathode line in use and the respective current source (150a-150b-150c) and, when said cathode line is unused, this cathode line is connected to a positive power supply.

2. Organic light-emitting diode drive circuit according to claim 1, **characterized in that** the positive power supply to which the first switches (220a-220b-220c) can be connected and the positive power supply to which the second switches (210a-210b-210c) can be connected are the same.

3. Organic light-emitting diode drive circuit according to claim 1 or 2, **characterized in that** said second switches (210a-210b-210c) are configured such that, when an anode line is in use, a connection is made between the anode line in use and a respective positive power supply and, when said anode line is unused, this anode line is connected to ground.

4. Organic light-emitting diode drive circuit according to claim 3, **characterized in that** any unused or inactive anode line is tied to ground at the same time that an active anode line is tied to a positive power supply.

5. Organic light-emitting diode drive circuit according to any of the preceding claims, **characterized in that** any inactive cathode line is tied to a positive power supply at the same time that an active cathode line is tied to its corresponding current source (150a-150b-150c).

6. Organic light-emitting diode drive circuit according to any of the preceding claims, **characterized in that** the drive circuit (200-300) makes use of first switches (220a-220b-220c) comprising NPN transistors (350-370).

7. Organic light-emitting diode drive circuit according to any of the preceding claims, **characterized in that** the drive circuit (200-300) makes use of second switches (210a-210b-210c) comprising MOSFET transistors (310-320).

8. Organic light-emitting diode drive circuit according to any of the preceding claims, **characterized in that** said current sources (150a-150b-150c) are referenced to ground.

9. Organic light-emitting diode drive circuit according to any of the preceding claims, **characterized in that** said anode lines (1-2-3) and cathode lines (4-5-6) are arranged along a substrate, whereby multiple pixels are formed, said anode lines (1-2-3) and cathode lines (4-5-6) being formed of a conductive layer; and **in that** at least one of said cathode lines (4-5-6) or anode lines (1-2-3) of the display shows a plurality of electrical 'connections spread over the length of said at least one line, which connections provide in an electrical connection to a common electrical conducting element of more massive structure than the conductive layers formed on the substrate, so as to reduce the parasitic series resistance of the material used for the conductive layers and/or so as to reduce the parasitic capacitance of the OLED display itself.

## Amended claims

### Amended claims in accordance with Rule 86(2) EPC.

**1.** Organic light-emitting diode drive circuit for a display application, said display comprising a plurality of organic light-emitting diodes (OLEDs) (120) having an anode and a cathode, said organic light-emitting diodes (OLEDs) (120) being connected to anode lines (1-2-3) and cathode lines (4-5-6), and at least one drive circuit (200-300), **characterized in that** the organic light-emitting diodes are arranged in a common anode configuration, whereas said drive circuit (200-300) is configured as a common anode drive device, wherein each concerned cathode line by means of a respective first switch (220) can be connected to a current source (150) and wherein each concerned anode line by means of a respective second switch (210) can be connected to a positive power supply; and **in that** the respective first switches (220) are configured such that, when, on the one Rand, a cathode line is in use, a direct connection is made between the cathodes of the organic light emitting diodes (OLEDs) (120) in use and the respective current source (150) and, when, on the other Rand, said cathode line is unused, each of the cathodes of the unused organic light emitting diodes (OLEDs) (120) is connected directly to a positive power supply.

**2.** Organic light-emitting diode drive circuit according to claim 1, **characterized in that** said current sources (150a-150b-150c) are permanently reference to ground.

**3.** Organic light-emitting diode drive circuit according to claim 1, **characterized in that** said respective first switch (220) consists of an active switch device, more specific of a conventional PMOS transistor.

**4.** Organic light-emitting diode drive circuit according to claim 1, **characterized in that** said respective first switch (220) comprises a MOSFET (310-320) of which the gate is electrically connected to respective control lines (9-10); the drain of the MOSFET (310-320) being electrically connected to the cathodes of foresaid OLEDs (120) and the source being electrically connected to a voltage source (230).

**5.** Organic light-emitting diode drive circuit according to claim 3, **characterized in that** said control lines (9-10) are connected to a pulse width modulator, which provides control signals to control the switching functions of the respective cathode line (4-5).

**6.** Organic light-emitting diode drive circuit according to claim 1, **characterized in that** said respective second switch (210) comprises a first transistor (350-370) and a second transistor (360-380); **in that** said respective second switch (210) is connected to a respective switch control line (7-8), and to a respective anode line (1-2), which is connected to the respective common anodes of the organic light-emitting diodes (OLEDs) (120); and **in that** said switch control lines (7-8) are controlled by a time division multiplexed signal.

**7.** Organic light-emitting diode drive circuit according to claim 6, **characterized in that** said second switches (210a-210b-210c) are configured such that, when an anode line is in use, a connection is made between the anode line in use and a respective power supply and, when said anode line is unused, this anode line is connected to the ground; and **in that** any unused or inactive anode line is tied to the ground at the same time that an inactive anode line is tied to a positive power supply.

**8.** Organic light-emitting diode drive circuit according to claim 5, **characterized in that** several anode lines (1-2-3) are controlled simultaneously as a group or bank, by a single switch control line (7-8).

**9.** Organic light-emitting diode drive circuit according to any of the preceding claims, **characterized in that** said anode lines (1-2-3) and cathode lines (4-5-6) are arranged along a substrate, whereby multiple pixels are formed, said anode lines (1-2-3) and cathode lines (4-5-6) being formed of a conductive layer; and **in that** at least one of said cathode lines (4-5-6) or anode lines (1-2-3) of the display shows a plurality of electrical connections spread over the length of said at least one line, which connections provide an electrical connection to a common electrical conducting element of more massive structure than the conductive layers formed on the substrate, so as to reduce the parasitic series resistance of the material used for the conductive layers and/or so as to reduce the parasitic capacitance of the OLED display itself.
